# EUROPEAN PATENT APPLICATION

(11) **EP 1 343 322 A1**
(43) Date of publication of application: **10.09.2003**
(21) Application number: 01270224.7
(22) Date of filing: 12.12.2001
(51) Int. Cl.: H04N 7/173

(54) **BROADCAST VIEWING METHOD, BROADCAST TRANSMITTING SERVER, MOBILE TERMINAL, AND MULTI-LOCATION CALLING/BROADCAST CONTROL VIEWING APPARATUS**

(30) Priority: 12.12.2000 JP 2000377048
(71) Applicant: NEC Corporation, Minato-ku, Tokyo 108-8001 (JP)
(72) Inventor: SATODA, Kozo, c/o NEC Corporation, Minato-ku, Tokyo 108-8001 (JP)
(74) Representative: Betten & Resch
(86) International application number: JP0110878
(87) International publication number: WO02049362

(57) **Abstract**

The broadcast-transmitting server in accordance with the present invention includes a separator for separating one or a plurality of broadcast provided through broadcast-distribution service, into broadcast images and broadcast data, a data transmitter for transmitting the broadcast data separated from the broadcast by the separator, to a mobile terminal, and a distributor which receives a request indicative of desired broadcast image determined based on the broadcast data, from the mobile terminal, and distributes the desired broadcast image among broadcast images separated from the broadcast by the separator, to the mobile terminal which transmitted the request to the distributor. The broadcast-transmitting server in accordance with the present invention makes it possible even for a user who does not have an apparatus for receiving television broadcast, at his or her home to receive broadcast distribution service from a television broadcast transmitting server through his or her mobile terminal, and hence, be able to looking at television programs, while he or she is out of his or her home.

## Description

### BACKGROUND OF THE INVENTION

The invention relates to a method of looking at and listening to broadcast for looking at television broadcast program through a mobile terminal, and further to a broadcast-transmitting server, a mobile terminal and a control apparatus for looking at and listening to broadcast and making communication in multi-point all of which are suitable for a system for looking at and listening to television programs through a mobile terminal.

### PRIOR ART

With digitalization of television broadcast, television programs are transmitted through a plurality of channels. In addition, unlike conventional television broadcast service in which only images and sound are distributed, there is suggested new service which provides television programs to which digital data is multiplexed.

In the specification, such multiplexed digital data is called broadcast data in order to distinguish from communication image and sound. Broadcast data includes electronic program guide (EPG) and program-related data. Herein, program-related data means an interactive program in which a television viewer can participate, or data indicative of present scores in sport games.

In order for a user to look at and listen to a desired television program in multi-channeled television broadcast while he or she is free, he or she may bring a portable television set with him or her. However, such a portable television set has to include all parts necessary for receiving television programs, such as a tuner, and as a result, is unavoidably large in a size and expensive. Thus, there have been suggested many systems to make it possible to look at and listen to television programs through the use of a mobile terminal not including parts necessary for receiving television programs, such as a tuner.

For instance, Japanese Patent Application Publication No. 11-136658 has suggested a combination of an interactive television set and a mobile terminal in which an interactive television program received at a television set located at a user's home is transferred to a user's mobile terminal through a public line network for a user to be able to look at and listen to the interactive television program even while a user is out of his or her home.

Japanese Patent Application Publication No. 11-346166 has suggested a portable system including a principal apparatus located at a user's home and a mobile terminal. In order to efficiently download television programs having been received and stored in the principal apparatus, to the mobile terminal, a smaller amount of data among data, sound and images constituting a television program is downloaded more early to the mobile terminal, resulting in that a whole of a television program can be downloaded to a mobile terminal in a short period of time.

Japanese Patent Application Publication No. 2000-183836 has suggested a data-transmission system including a receiver located at a user's home and a mobile terminal. The receiver is designed to be remote-controllable by the mobile terminal and the receiver is designed to transmit various data received from digital satellite broadcast, to the mobile terminal through a communication network in order to make it possible for a user to obtain data transmitted from digital satellite broadcast even while a user is out of his or her home. As data to be transmitted to the mobile terminal, there are listed image and sound signals as well as broadcast data such as EPG. The image and sound signals are transmitted to the mobile terminal without any modification to the received image and sound signals.

Japanese Patent Application Publication No. 2000-295588 has suggested an apparatus for receiving a digital data program. Even if a user is located away from a television set, the user can automatically receive necessary data among data signals multiplexed to the program, through a telephone line network. In the suggested apparatus, data signals extracted from television broadcast signals are temporarily stored in a memory, and a central processing unit (CPU) checks whether the data signals are grouped into a predetermined genre or whether the data signals include a predetermined keyword. If a predetermined item is found in retrieval in the data signals, the data signals are stored in a memory. Thereafter, if a telephone number of a target person is stored in a user's cellular phone, a call is automatically made to the target person. When it is confirmed that a line between the user and the target person has been established, it is checked which form data to be transmitted has. If data has a form of "sound", the data signals stored in the memory are converted into sound data, and then, transmitted through a modem.

With a recent increase in radio-signal communication speed, there has been suggested a mobile terminal in the form of a television telephone which terminal enables a user to look at image clips such as advertisement of movies or promotion films of music artists, and to have a chat seeing images of a person with which the user is making communication now.

As mentioned above, there have been suggested a variety of systems for looking at and listening to television programs through the use of a mobile terminal. However, in all of such conventional systems as mentioned above, it was unavoidable for a user to set his or her television set at a base such as his or her home as a principal apparatus for receiving television programs. Accordingly, the conventional systems were accompanied with a problem that a user who does not have a television set at a base such as his or her home cannot look at and listen to television programs while he or she is out of his or her home.

The conventional mobile terminals were accompanied with a problem that a user cannot look at and listen to television programs while he or she is making communication with others through the mobile terminal, and that a user and a person with whom the user is making communication cannot commonly look at television programs while they are having a chat.

### DISCLOSURE OF THE INVENTION

In view of the above-mentioned problems in the prior art, it is an object of the present invention to enable a user to be able to look at and listen to television programs through a mobile terminal while he or she is out of his or her home, even if he or she does not set a particular equipment for receiving television programs at a base such as his or her home.

Another object of the present invention is to enable a user to be able to look at and listen to television programs while he or she is having a chat with his or her friend through their mobile terminals, and to join conversation or conference with images of television programs being commonly owned with other participants.

In the first aspect of the present invention, there is provided a broadcast-transmitting server including a separator for separating one or a plurality of broadcast provided through broadcast-distribution service, into broadcast images and broadcast data, a data transmitter for transmitting the broadcast data separated from the broadcast by the separator, to a mobile terminal, and a distributor which receives a request indicative of desired broadcast image determined based on the broadcast data, from the mobile terminal, and distributes the desired broadcast image among broadcast images separated from the broadcast by the separator, to the mobile terminal which transmitted the request to the distributor.

For instance, the distributor may be comprised of one or a plurality of transmitter(s) which transmit(s) the desired broadcast image requested by the mobile terminal based on the broadcast data, to the mobile terminal which transmitted the request, and a multi-caster which provides the broadcast image requested by the transmitter among broadcast images separated from the broadcast by the separator, to the transmitter which requested to receive the broadcast image.

The multi-caster may be designed to distribute the broadcast image separated from the broadcast by the separator, in a multi-casting way, and the transmitter(s) may be designed to select broadcast image or broadcast images among the broadcast images distributed from the multi-caster, in accordance with the request transmitted from the mobile terminal.

The distributor may be designed to monitor whether the transmitter is in operation or not, and assigns a transmitter not in operation to the mobile terminal on receipt of the request from the mobile terminal.

It is preferable that the broadcast-transmitting server further includes a data-form converter which converts a form of the broadcast data separated from the broadcast by the separator, into a form suitable for being displayed in the mobile terminal.

It is preferable that the broadcast-transmitting server may further include a converter which converts a form of the broadcast image separated from the broadcast by the separator, into a form suitable for being displayed or reproduced in the mobile terminal.

In the second aspect of the present invention, there is provided a broadcast-transmitting server including a separator for separating one or a plurality of broadcast provided through broadcast-distribution service, into broadcast images and broadcast data, a data-transmitter which transmits the broadcast data separated from the broadcast by the separator, to a control apparatus for looking at and listening to broadcast and making communication in multi-point which apparatus receives image and sound from one or a plurality of mobile terminal(s), and synthesizes image and sound, respectively, for producing communication image and communication sound, and a distributor receives a request of transmission of desired broadcast image through the control apparatus which request is determined in the mobile terminal in accordance with the broadcast data transmitted through the control apparatus, and transmits the requested desired broadcast image among the broadcast images separated from the broadcast by the separator, into the control apparatus which transmitted the request.

The distributor may be designed to be comprised of one or a plurality of transmitter(s) which receive(s) the request of transmission of desired broadcast image through the control apparatus, and transmit(s) the requested desired broadcast image to the mobile terminal which transmitted the request, through the control apparatus, and a multi-caster which distributes broadcast image requested by the transmitter(s) among the broadcast images separated from the broadcast by the separator, to the transmitter(s) which transmitted the request.

For instance, the multi-caster may be designed to distribute the broadcast image separated from the broadcast by the separator, in a multi-casting way, and the transmitter(s) selects broadcast image or broadcast images among the broadcast images distributed from the multi-caster, in accordance with the request transmitted from the mobile terminal through the control apparatus.

It is preferable that the broadcast-transmitting server further includes a data-form converter which converts a form of the broadcast data separated from the broadcast by the separator, into a form suitable for being displayed in the mobile terminal making communication with the control apparatus.

It is preferable that the broadcast-transmitting server further includes a converter which converts a form of the broadcast image separated from the broadcast by the separator, into a form suitable for being displayed or reproduced in the mobile terminal making communication with the control apparatus.

In the third aspect of the present invention, there is provided a control apparatus for looking at and listening to broadcast and making communication in multi-point, including a request receiver which receives requests from mobile terminals, a image/sound receiver which receives image and sound transmitted from the mobile terminals, a broadcast-data receiver which receives, from a broadcast-transmitting server which separates one or a plurality of broadcast provided through broadcast-distribution service, into broadcast images and broadcast data, and distributes the broadcast images and the broadcast data, the broadcast data in accordance with a request transmitted from the mobile terminal, a receiver which receives a request of transmission of desired broadcast image determined by the mobile terminal in accordance with the broadcast data, transmits the request to the broadcast-transmitting server, and receives the desired broadcast image from the broadcast-transmitting server, an image/sound synthesizer which synthesizes image and sound received by the image/sound receiver for producing communication image and communication sound, and, on receipt of a request from the request receiver, synthesizes the broadcast data received by the broadcast-data receiver or the broadcast image received by the receiver and the communication image and sound with each other, and a multi-point image/sound transmitter which transmits the communication image and sound having been synthesized with the broadcast data or the broadcast image in the image/sound receiver, to the mobile terminal.

It is preferable that the control apparatus further includes a broadcast-data transmitter which transmits the broadcast data received by the broadcast-data receiver, to the mobile terminal transmitting the request, and an image/sound transmitter which transmits the broadcast image received by the receiver, to the mobile terminal transmitting the request.

It is preferable that the broadcast data is transmitted as packets through packet-switching network or internet network of public line, and the broadcast image, the communication image and the communication sound are transmitted through line-switching network.

In the fourth aspect of the present invention, there is provided a mobile terminal including a broadcast-data receiver which receives, from a broadcast-transmitting server which separates one or a plurality of broadcast provided through broadcast-distribution service, into broadcast images and broadcast data, and distributes the broadcast images and the broadcast data, the broadcast data, a receiver which transmits a request of transmission of desired broadcast image determined in accordance with the broadcast data, to the broadcasting-transmitting server, and receives the desired broadcast image from the broadcast-transmitting server, and a display controller which displays the broadcast data received by the broadcast-data receiver or the broadcast image received by the receiver.

It is preferable that the display controller concurrently displays the broadcast data received by the broadcast-data receiver and the broadcast image received by the receiver.

It is preferable that the receiver receives broadcast sound, and further including a reproduction controller which outputs received broadcast sound.

It is preferable that the broadcast-data receiver successively transmits a request of transmission of the broadcast data to the broadcast-transmitting server, and successively receives the broadcast data from the broadcast-transmitting server, and the display controller successively displays the broadcast data received by the broadcast-data receiver.

It is preferable that the mobile terminal works as a cellular phone.

It is preferable that the mobile terminal has a function of a cellular phone which makes communication with other phones through sound and image, the display controller displays image of a parson with which the mobile terminal makes communication, or the broadcast image, and the reproduction controller outputs voice of a person with which the mobile terminal makes communication, or the broadcast sound.

In the fifth aspect of the present invention, there is provided a mobile terminal including a communicator which receives, from a control apparatus for looking at and listening to broadcast and making communication in multi-point which apparatus receives images and sound from one or a plurality of mobile terminal(s), and synthesizes the images and the sound with one another, respectively, to thereby produce communication image and communication sound. the communication image and the communication sound, a broadcast-data receiver which transmits a request of transmission of broadcast data to the control apparatus, causes the control apparatus to receive the requested broadcast data from a broadcast-transmitting server which separates one or a plurality of broadcast provided through broadcast-distribution service, into broadcast images and broadcast data, and distributes the broadcast images and the broadcast data, and receives the requested broadcast data from the control apparatus, and a receiver which transmits a request of transmission of desired broadcast image determined in accordance with the broadcast data received by the broadcast-data receiver, to the control apparatus, and receives the desired broadcast image from the broadcast-transmitting server.

It is preferable that the broadcast-data receiver transmits a request of synthesizing the broadcast data to the communication image to the control apparatus, and causes the control apparatus to synthesize the broadcast data and the communication image to each other and transmit the communication sound and the communication image to which the broadcast data has been synthesized, and the communicator receives the communication sound and the communication image to which the broadcast data has been synthesized, from the control apparatus.

It is preferable that the receiver transmits a request of synthesizing the broadcast image to the communication image to the control apparatus, and causes the control apparatus to synthesize the broadcast image and the communication image to each other and transmit the communication sound and the communication image to which the broadcast image has been synthesized, and the communicator receives the communication sound and the communication image to which the broadcast image has been synthesized, from the control apparatus.

It is preferable that the receiver receives broadcast sound, and that the mobile terminal further includes a display controller which displays at least one of the broadcast data received by the broadcast-data receiver, the broadcast image received by the receiver, and the communication image received by the communicator, and a reproduction controller which outputs the communication sound received by the receiver or the communication sound received by the communicator.

It is preferable that the display controller concurrently displays the broadcast data received by the broadcast-data receiver and the communication image received by the communicator in a display unit.

In the sixth aspect of the present invention, there is provided a method of looking at and listening to broadcast between a broadcast-transmitting server and a plurality of mobile terminals connected to the broadcast-transmitting server through a communication network, including the broadcast-transmitting server separating one or a plurality of broadcast provided through broadcast-distribution service, into broadcast image and broadcast data, and transmitting the broadcast data to the mobile terminal, the mobile terminal receiving the broadcast data, and transmitting a request of transmission of the broadcast image to the broadcast-transmitting server in accordance with the broadcast data, and the broadcast-transmitting server receiving the request from the mobile terminal. and transmitting the requested broadcast image to the mobile terminal.

In the seventh aspect of the present invention, there is provided a method of looking at and listening to broadcast between a broadcast-transmitting server and a plurality of mobile terminals connected, to the broadcast-transmitting server through a communication network, including the mobile terminal transmitting a request of transmission of broadcast data to the broadcast-transmitting server, the broadcast-transmitting server receiving the request transmitted from the mobile terminal, separating one or a plurality of broadcast provided through broadcast-distribution service, into broadcast image and broadcast data, and transmitting the broadcast data to the mobile terminal which transmitted the request, the mobile terminal receiving the broadcast data, and transmitting a request of transmission of the broadcast image to the broadcast-transmitting server in accordance with the broadcast data, and the broadcast-transmitting server receiving the request from the mobile terminal, and transmitting the requested broadcast image to the mobile terminal.

In the eighth aspect of the present invention, there is provided a method of looking at and listening to broadcast among a broadcast-transmitting server, a plurality of mobile terminals, and a control apparatus for looking at and listening to broadcast and making communication in multi-point which apparatus is connected to the broadcast-transmitting server and the mobile terminals through a communication network, including the control apparatus receiving images and sound from one or a plurality of mobile terminal(s), synthesizing the images and the sound with one another, respectively, to thereby produce communication image and communication sound, and transmitting the thus produced communication image and communication sound, the mobile terminal receiving the communication image and the communication sound, displaying the communication image, outputting the communication sound, and transmitting a request of transmission of broadcast data to the control apparatus, the control apparatus requested the broadcast-transmitting server to transmit thereto the broadcast data requested by the mobile terminal, the broadcast-transmitting server separating one or a plurality of broadcast provided through broadcast-distribution service, into broadcast image and broadcast data, and transmitting the requested broadcast data to the control apparatus, and the control apparatus receiving the broadcast data and transmitting the thus received broadcast data to the mobile terminal.

It is preferable that the mobile terminal requests the control apparatus to synthesize the broadcast data received by the control apparatus, the control apparatus synthesizes the broadcast data, the communication image and the communication sound with one another, and transmits them to the mobile terminal, and the mobile terminal receives and outputs the communication image and the communication sound to which the broadcast data has been synthesized.

In the ninth aspect of the present invention, there is provided a method of looking at and listening to broadcast among a broadcast-transmitting server, a plurality of mobile terminals, and a control apparatus for looking at and listening to broadcast and making communication in multi-point which apparatus is connected to the broadcast-transmitting server and the mobile terminals through a communication network, including the control apparatus receiving images and sound from one or a plurality of mobile terminal(s), synthesizing the images and the sound with one another, respectively, to thereby produce communication image and communication sound, and transmitting the thus produced communication image and communication sound, the mobile terminal receiving the communication image and the communication sound, displaying the communication image, outputting the communication sound, and transmitting a request of transmission of broadcast image to the control apparatus, the control apparatus requested the broadcast-transmitting server to transmit thereto the broadcast image requested by the mobile terminal, the broadcast-transmitting server separating one or a plurality of broadcast provided through broadcast-distribution service, into broadcast image and broadcast data, and transmitting the requested broadcast image to the control apparatus, and the control apparatus receiving the broadcast image and transmitting the thus received broadcast image to the mobile terminal.

It is preferable that the mobile terminal requests the control apparatus to synthesize the broadcast image received by the control apparatus, the control apparatus synthesizes the broadcast image, the communication image and the communication sound with one another, and transmits them to the mobile terminal, and the mobile terminal receives and outputs the communication image and the communication sound to which the broadcast image has been synthesized.

### BRIEF DESCRIPTION OF THE DRAWINGS

FIG. 1 is a block diagram of a system for looking at and listening to television programs through the use of a broadcast-transmitting server and a mobile terminal, in accordance with the first embodiment of the present invention.
FIG. 2 is a flow-chart showing an operation of the system in accordance with the first embodiment of the present invention.
FIG. 3 is a flow-chart showing an operation of a mobile terminal used in the system in accordance with the first embodiment of the present invention.
FIG. 4 is a block diagram of an example of the system in accordance with the first embodiment of the present invention.
FIG. 5 is a block diagram of an example of a mobile terminal having a function of a television telephone.
FIG. 6 is a block diagram of a system for looking at and listening to television programs through the use of a broadcast-transmitting server and a mobile terminal, in accordance with the second embodiment of the present invention.
FIG. 7 is a flow-chart showing an operation of the system in accordance with the second embodiment of the present invention.
FIG. 8 is a flow-chart showing an operation of the system in accordance with the second embodiment of the present invention.

### DETAILED DESCRIPTION OF THE PREFERRED EMBODIMENTS

Preferred embodiments in accordance with the present invention will be explained hereinbelow with reference to drawings.

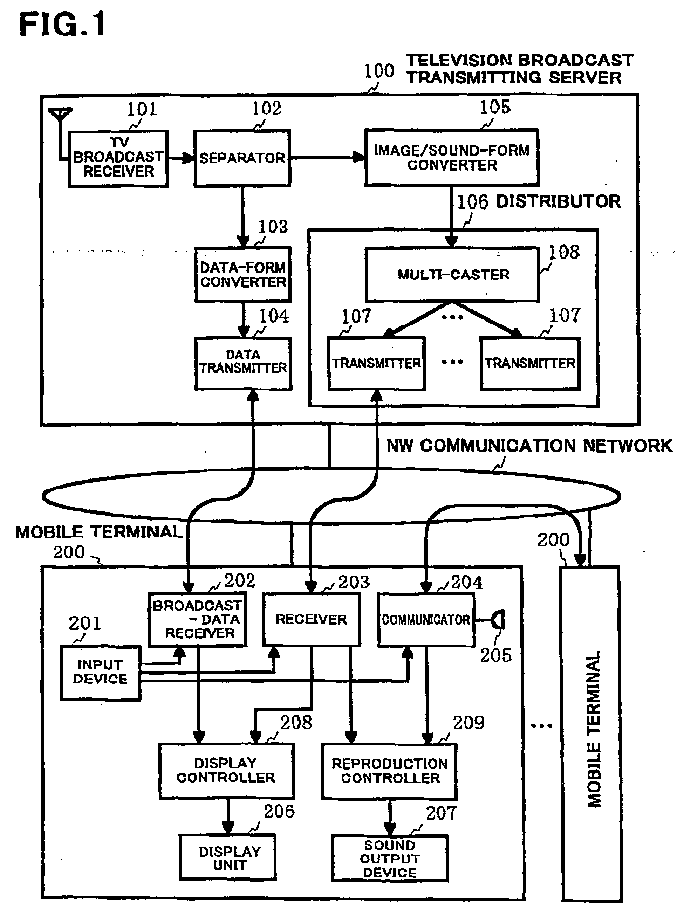

FIG. 1 is a block diagram of a system for looking at and listening to television programs through the use of a broadcast-transmitting server and a mobile terminal, in accordance with the first embodiment of the present invention.

As illustrated in FIG. 1, the system for looking at and listening to television programs, in accordance with the first embodiment, is comprised of a television broadcast transmitting server 100, a plurality of mobile terminals 200, and a communication network NW interactively connecting them to each other. The communication network NW may be comprised of a packet-switching network of public line, an internet network or a public line-switching network. The communication network NW includes all networks transmitting data through radio-signals and wires.

The television broadcast transmitting server 100 connects a television broadcast station (not illustrated) and the mobile terminals 200 to each other. The television broadcast transmitting server 100 receives television programs transmitted from one or more television broadcast station(s), and distributes the received television programs to clients, that is, the mobile terminals 200 for counter value or free of charge. Each of the mobile terminals 200 is owned by a user, and is fabricated in a small size and in a small weight such that a user can readily carry it with him or her. Each of the mobile terminals 200 is designed to be able to receive television broadcast service on making access to the television broadcast transmitting server 100 through the communication network NW through radio-signals, or modulars of public phones and wires.

The mobile terminals 200 in the first embodiment can be designed to be used as a cellular phone.

Hereinbelow is explained an example of a structure of the television broadcast transmitting server 100 and the mobile terminals 200.

For simplification of explanation, the example explained hereinbelow refers to distribution service of BS digital broadcast. However, it should be noted that the present invention may be applied to distribution service of any digital broadcast including ground-wave digital broadcast, as well as distribution service of BS digital broadcast, and that the present invention may be applied to distribution service of analog broadcast which distributes not only images and sound, but also data such as characters. In addition, two or more broadcast may be distributed in the distribution service, which is applied to embodiments mentioned later.

The television broadcast transmitting server 100 is comprised of a television broadcast receiver 101 which receives BS digital broadcast, a separator 102 which separates the received BS digital broadcast into image/sound signals and broadcast data in each of channels, a data-form converter 103 which converts a form of the broadcast data into a form suitable for being displayed in the mobile terminal 200, a data transmitter 104 which transmits the broadcast data having been converted by the data-form converter 103 with respect to a form, to the mobile terminal 200, an image/sound-form converter 105 which converts a form of the image/sound signals for each of channels into a form suitable for being reproduced and displayed in the mobile terminal 200, and a distributor 106 which, on receipt of a request from the mobile terminal(s) 200 to transmit the image/sound signals in a particular channel, concurrently distributes the requested image/sound signals among the image/sound signals having been converted by the image/sound-form converter 105 with respect to a form, to all of the mobile terminals 200 having transmitted the request.

The receiver 101 is comprised of a terminal for receiving BS digital broadcast, set in each home, for instance. Since it is necessary for the receiver 101 to always receive television programs now being broadcast in all channels, the receiver 101 includes a plurality of terminals for receiving BS digital broadcast in each of channels such as BS-1 or BS-2. With the receiver 101 including such a plurality of terminals, the separator 102, the data-form converter 103 and the image/sound-form converter 105 are designed to have a multiplexed structure in order to concurrently carry out separation, conversion of a data form, and conversion of an image/sound form.

The distributor 106 is comprised of a plurality of transmitters 107 each of which transmits image/sound signals in a channel requested by the mobile terminal 200, to the mobile terminal 200 which transmitted a request of transmission of image/sound signals in a particular channel to the distributor 106, and a multi-caster 108 efficiently distributes image/sound signals in a channel requested by the transmitter 107 among image/sound signals in channels, received from the image/sound-form converter 105, to the transmitter 107 which transmitted a request of transmission of image/sound signals in a particular channel to the multi-caster 108.

The distributor 106 includes the necessary number of the transmitters 107. The multi-caster 108 monitors whether each of the transmitters 107 is in use or not. On receipt of a request from the mobile terminal 200 to transmit images and sound of a television program to the mobile terminal 200, the multi-caster 108 determines one transmitter 107 among the transmitters 107 not used at that time, and assigns the thus determined transmitter 107 to the mobile terminal 200 having transmitted the request, in order to transmit images and sound to the mobile terminal 200.

The mobile terminals 200 have a common structure to one another, and each of the mobile terminals 200 is comprised of an input device 201 for receiving inputs from a user, such as a keyboard, a broadcast-data receiver 202 for receiving broadcast data transmitted from the television broadcast transmitting server 100, a receiver 203 which transmits a request of transmission of image/sound signals in a channel indicated by a user, to the television broadcast transmitting server 100, and receives image/sound signals transmitted from the television broadcast transmitting server 100 in response to the request, a communicator 204 which applies a function of a cellular phone to the mobile terminal 200, a sound input device 205 such as a microphone for introducing user's voice to the communicator 204, a display unit 206 such as a liquid crystal display device, a sound output device 207 such as a speaker, a display controller 208 which displays broadcast data received in the broadcast-data receiver 202 and images received in the receiver at the display unit 206, a reproduction controller 209 which outputs both voices received in the receiver 203 and voices of a caller received in the communicator 204 through the sound output device 207, and a power source (not illustrated) feeding power to the above-mentioned parts.

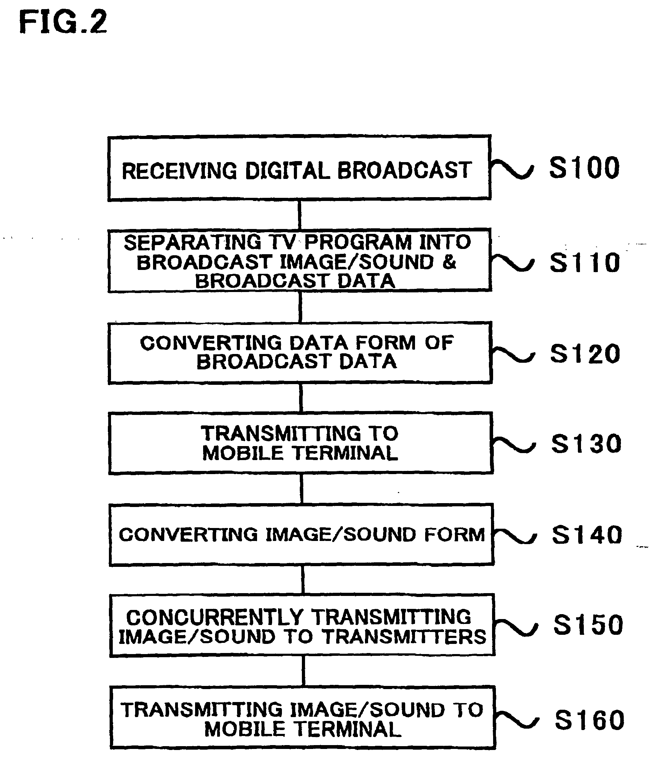

FIG. 2 is a flow-chart showing an operation of the system including the television broadcast transmitting server 100 and the mobile terminals, in accordance with the first embodiment. Hereinbelow is explained an operation of the system in accordance with the first embodiment, with reference to FIG. 2.

The television broadcast transmitting server 100 always receives BS digital broadcast through its television broadcast receiver 101, in step S100.

BS digital broadcast provides television programs in each of channels, and further provides EPG. In addition, the television programs provide images and sound, and an interactive program in which a television viewer can take part and/or data indicative of present score of sport games, multiplexed to the television program, are also transmitted.

The separator 102 separates the television programs into broadcast image and sound, and broadcast data other than images and sound, specifically, EPG and program-related data, in step S110.

The broadcast data is described in a broadcast markup language (BML). However, BML is a markup language suitable for being displayed in a television screen, and hence, is frequently not suitable for being displayed in a small screen of the mobile terminal 200. Accordingly, the data-form converter 103 converts a form of the broadcast data into a proper form (an example of a proper data form will be explained later), in step S120.

The broadcast data having been converted by the data-form converter 103 with respect to a data form is transmitted to the mobile terminal 200 through the data transmitter 104.

The images and sound separated from the television programs by the separator 102 in each of channels are transmitted to the image/sound-form converter 105.

Images and sound are encoded in accordance with MPEG-2 which is an encoding system as one of ISO standards. However, MPEG-2 is accompanied with problems that a resolution of images is too high and communication volume is too large for an ordinary mobile terminal to look at images and listen to sound. Hence, the image/sound-form converter 105 converts a form of the images and sound into a form suitable for being received by the mobile terminal 200, in step S140.

For instance, if the images are encoded in accordance with MPEG-4 which is an encoding system as one of ISO standards, a resolution of images is reduced, and the images become suitable for being looked at in the mobile terminal 200. With respect to the sound, it is preferable that the sounds are encoded in accordance with a sound-encoding system such as AMR to reduce a bit rate.

The images and sound having been converted by the image/sound-form converter 105 with respect to a form in each of channels are concurrently transmitted to a plurality of the transmitters 107 through the multi-caster 108, in step S150.

The image/sound-form converter 105 converts an image/sound form in a plurality of channels, and the multi-caster 108 transmits the thus converted image and sound in a multi-casting manner. Each of the transmitters 107 selects a channel through which the images and sound are transmitted, in accordance with a request transmitted from the mobile terminal 200, receives proper images and sound from the multi-caster 108, and transmits the images and sound to the mobile terminal 200, in step S160.

The television broadcast transmitting server 100 operates in the above-mentioned way.

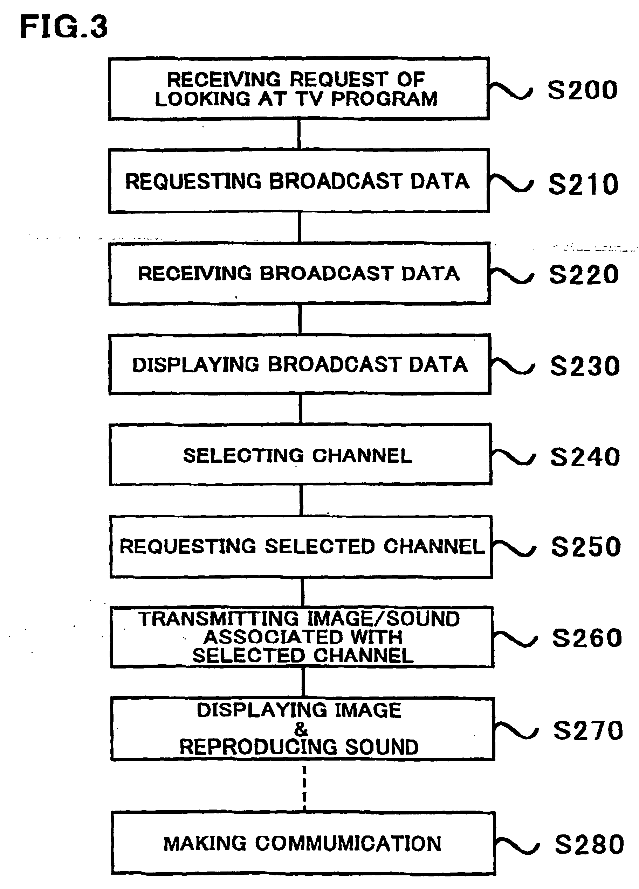

FIG. 3 is a flow-chart showing an operation of the mobile terminal 200 in the first embodiment. Hereinbelow is explained an operation of the mobile terminal 200 with reference to FIG. 3.

On receipt of a request of looking at television program from a user through the input device 201 (step S200), the mobile terminal 200 transmits a request of transmission of broadcast data to the data transmitter 104 of the television broadcast transmitting server 100 through the broadcast-data receiver 202 (step S210), and receives broadcast data including EPG or program-related data having been converted into a suitable form (step S220).

The display controller 208 displays the broadcast data received by the broadcast-data receiver 202, in a screen of the display unit 206 to show the broadcast data to a user (step S230).

Looking at the displayed broadcast data, a user selects a channel corresponding to an interested program, through the input device 201 (step S240). After a user selected a channel, the receiver 203 transmits a request of transmission of images and sound associated with the selected channel, to the distributor 106 of the television broadcast transmitting server 100 (step S250).

The distributor 106 assigns one transmitter 107 to the mobile terminal 200 transmitting the request, and then, transmits images and sound associated with the requested channel, through the thus assigned transmitter 107 (step S260).

The receiver 203 receives the images and sound from the transmitter 107. The received images are displayed at the display unit 206 by the display controller 208, and the sound is output through the sound output device 207 by the reproduction controller 209. Thus, a user can look at and listen to a television program associated with the selected channel (step S270).

On the other hand, if a dial number is input and a calling step is carried out through the input device 210, a call is made by the communicator 204 similarly to an ordinary cellular phone, and hence, a user can make communication with a dialed person (step S280). In the communication, user's sound is input through the sound input device 205, and sound of a dialed person is output through the sound output device 207 by the reproduction controller 209. A dialed person may have another mobile terminal 200 or a fixed telephone.

The mobile terminal 200 may be designed for a user to select a function of making communication, a function of looking at and listening to a television program, or both. When the mobile terminal 200 is designed to be able to provide both a function of making communication and a function of looking at and listening to a television program, the reproduction controller 209 mixes sound of a television program received by the receiver 203 and voices of a person with whom a user of the mobile terminal 200 is making communication, received by the communicator 204, to each other, and then, outputs the mixed sound through the sound output device 207.

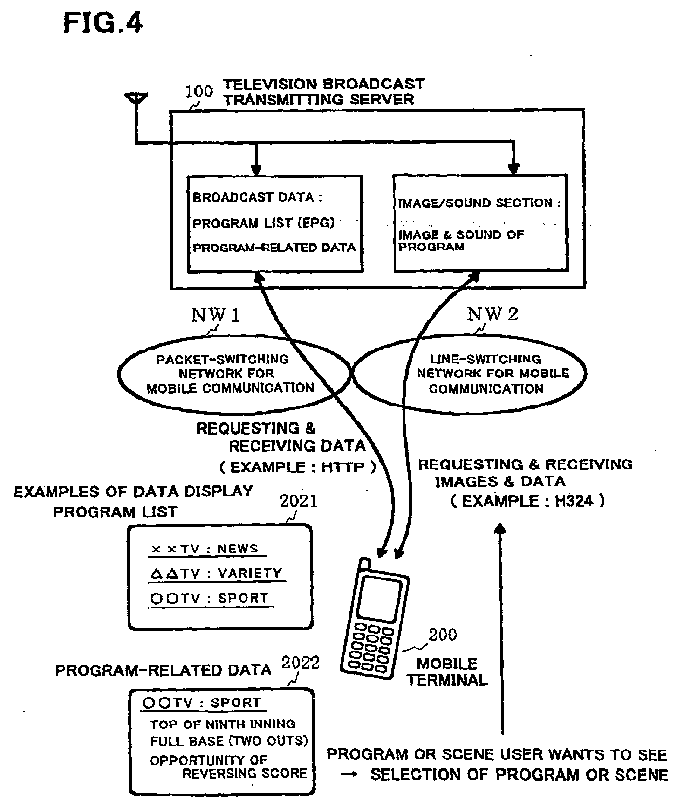

FIG. 4 is a block diagram of an example of the above-mentioned first embodiment.

The television broadcast transmitting server 100 separates received television broadcast into broadcast data including program-related data comprised of EPG, a progress of a program and so on, and images and sound of programs in each of channels. If the broadcast data is described in HTML which is a data form available in World Wide Web (WWW) presently globally used, availability of the broadcast data is increased. It is preferable in particular that the broadcast data is described in compact HTML (C-HTML) for the mobile terminal 200 to be able to look at the broadcast data. Accordingly, it is preferable for the data-form converter 103 of the television broadcast transmitting server 100 to have a function of converting broadcast data described in BAIL, into broadcast data described in C-HTML.

If hyperlink to images of television programs relating to the broadcast data is used, it would be possible to carry out such data-form conversion that broadcast data and broadcast images are related to each other and a user can readily understand relation between them. The broadcast data in C-HTML form is stored in a memory (not illustrated) to which the data transmitter 104 can make access, and is updated at any time, in which case, the data transmitter 104 is constituted as a WWW server which interprets HTTP protocol and transmits broadcast data including a program list and program-related data both described in C-HTML, in compliance with a request transmitted from the mobile terminal 200 as a client.

The broadcast-data receiver 202 of the mobile terminal 200 may be designed to have any structure, if it can transmit a request of transmission of broadcast data to the data transmitter 104 acting as a WWW server, receive the requested broadcast data, and display the received broadcast data through the display controller 208. For instance, by virtue of presently popularized "i-mode" of a cellular phone, the mobile terminal 200 can transmit a request to the data transmitter 104 acting as a WWW server to transmit broadcast data including a program list and program-related data through a packet-switching network NW1 available for mobile communication, and display the received broadcast data in the display unit 206 of the mobile terminal 200. In this case, the broadcast data is transmitted in the form of packets.

By carrying out the above-mentioned steps, a user can look at a program list such as an example of a data-displayed screen 2021, through the mobile terminal 200. If a user selects a program the detail of which he or she would like to see, he or she can look at the detail of the selected program or program-related data indicative of a progress of the program, such as an example of a data-displayed screen 2022.

In the case that a progress of a program successively varies as a program of a sport game, the data transmitter 104 successively transmits data in so-called pushing manner, and the broadcast-data receiver 202 receives successively transmitted data. Thus, a user can check a progress of a program. Data transmission may be carried out in pseudo-pushing manner in which the broadcast-data receiver 202 successively transmits a request of data transmission to the data transmitter 104.

Seeing the display screen, a user can select a channel associated with images which he or she would like to see, in a program list. Seeing a progress of a certain program, a user may would like to see not only program-related data, but also images of the program, since he or she has an interest in further progress of the program. In such cases, by selecting a channel through the input device 201, the receiver 203 of the mobile terminal 200 makes communication with one of the transmitters 107 of the television broadcast transmitting server 100, receives a stream of the images and sound of the program from the transmitter 107, displays the received images in the display unit 206 through the display controller 208, and outputs the sound from the sound output device 207 through the reproduction controller 209. For instance, the display controller 208 may display the broadcast data received by the broadcast-data receiver 202, in an upper half of a screen of the display unit 206, and display the images received by the receiver 203, in a lower half of a screen of the display unit 206, so that a user can concurrently look at the broadcast data and the broadcast images.

A protocol for transmitting and receiving images and sound should not be limited to a particular protocol. However, in a system in which a program is once recorded and stored in a server, and the program is downloaded to the mobile terminal 200 after the program ended, it is not possible to accomplish real-time action in which a user can look at a program now on air at real-time, and in addition, it would take much time to download the program to the mobile terminal 200, and resultingly, a user may not be able to see a program while the program is being downloaded to his or her mobile terminal 200. Accordingly, it is preferable to select a protocol by which images are transmitted picture by picture, and sound is divided into a plurality of sections each having a certain period of time, and then, transmitted section by section, and further by which the mobile terminal 200 joins the pictures and the sections together to thereby provide a user with the images and sound.

As such a protocol, there may be used H.324 defined by ITU-T for next generation cellular phone, for instance. The protocol H.324 accomplishes a television telephone in which a user transmits his or her image and sound to a dialed person and receives a dialed person's image and sound through a line-switching network for mobile communication to thereby make it possible for a user to make communication with a dialed person, looking at images of a dialed person at real-time. Accordingly, it would be possible to look at and listen to broadcast image and sound at real-time by installing the protocol H.324 into the transmitters 107 of the television broadcast transmitting server 100 and the receiver 203 of the mobile terminal 200, and further by making communication between them through the line-switching network NW2 to be used for mobile communication.

The images and sound may be transmitted through an internet as well as the line-switching network NW2, in which case, it would be possible to look at and listen to the broadcast images and sound in accordance with the protocol H.323 defined by ITU-T, in which the broadcast images and sound are transmitted as packets similarly to the broadcast data.

In the first embodiment, the mobile terminal 200 is designed to have a function as a telephone making communication with others through voices. However, the mobile terminal 200 may be designed to have a camera to thereby have a function as a television telephone similar to a next-genexation type cellular phone.

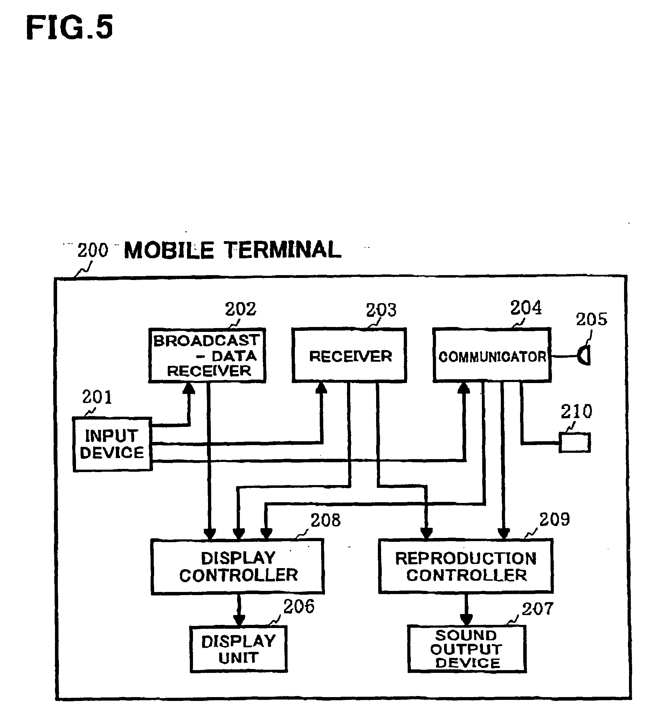

FIG. 5 is a block diagram of an example of a structure of the mobile terminal 200 having a function of a television telephone.

The communicator 204 in the mobile terminal 200 illustrated in FIG. 5 is electrically connected not only to the communicator 205, but also to an image input device 210 such as a digital camera, and hence, the communicator 204 has a function of making communication in not only sound, but also images with another telephone having a function of a television telephone.

Images of a dialed person, received by the communicator 204, are displayed in the display unit 206 by the display controller 208. The mobile terminal 200 may be designed to carry out looking at and listening to television broadcast or making communication as a television telephone. As an alternative, the mobile terminal 200 may be designed to carry out both. If the mobile terminal 200 is designed to enable a user to both look at and listen to a television program, and make communication with others in the form of a television telephone, the display controller 208 concurrently displays the broadcast images received by the receiver 203 and images of a dialed person received by a function of a television telephone, in a screen of the display unit 206. For instance, a screen of the display unit 206 may be divided into two areas, and the broadcast images and a dialed person's images may be displayed in each of the two areas. In addition, the broadcast data received by the broadcast-data receiver 202 may be displayed together.

The reproduction controller 209 mixes television sound and communication sound to each other, and outputs the thus mixed sound through the sound output device 207, similarly to the mobile terminal 200 illustrated in FIG. 1.

The mobile terminal 200 having a function of a television telephone may be used in a multi-point conference in which communication is made among a plurality of points. In such a multi-point conference, it would be quite convenient for participants, if they can look at a television program during a conference, or commonly have images of a television program. Hereinbelow is explained an example in which the present invention is applied to a multi-point conference.

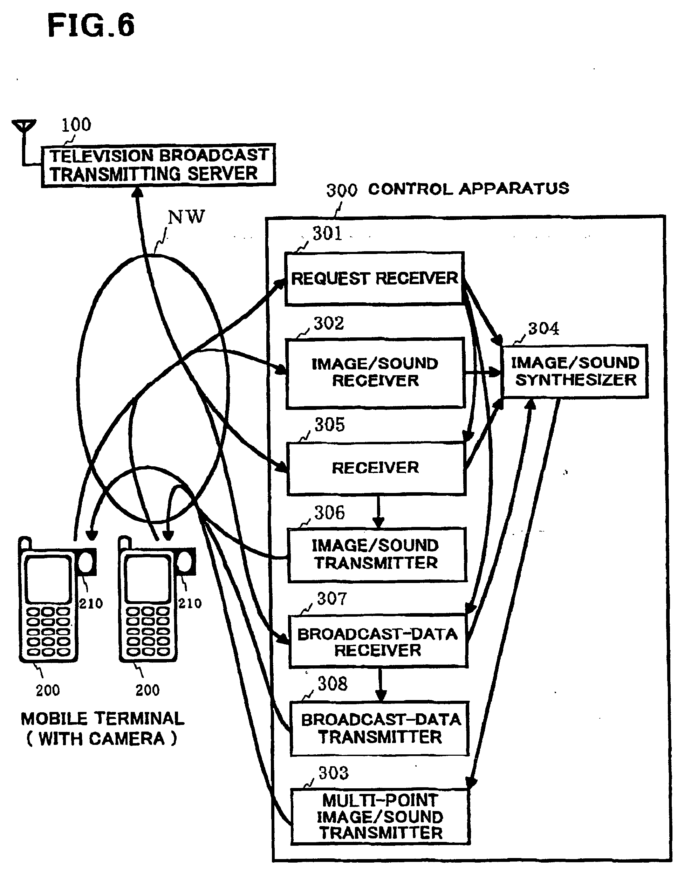

FIG. 6 is a block diagram of a system for looking at and listening to a television program, in accordance with the second embodiment of the present invention, including a television broadcast transmitting server, a control apparatus for looking at and listening to a television program and making communication in multi-point, and mobile terminals.

The system for looking at and listening to a television program, in accordance with the second embodiment, is comprised of a television broadcast transmitting server 100, a plurality of mobile terminals 200 each equipped with a camera, a control apparatus 300 for looking at and listening to a television program and making communication in multi-point, and a communication network NW connecting them to one another.

In comparison with the television broadcast transmitting server 100 illustrated in FIG. 1 in the first embodiment, the television broadcast transmitting server 100 in the second embodiment operates in the same manner as that of the television broadcast transmitting server 100 in the first embodiment except the data transmitter 104 and the distributor 106.

The data transmitter 104 of the television broadcast transmitting server 100 in the second embodiment transmits the broadcast data not only to the mobile terminal 200 which made direct access thereto, but also to the control apparatus 300. The distributor 106 transmits the broadcast image and sound to the mobile terminal. 200 which made direct access to the television broadcast transmitting server 100, receives a request of transmission of images and sound of a television program from the control apparatus 300, assigns the transmitter 107 which is now not in operation, to the control apparatus 300, and transmits the broadcast images and sound to the control apparatus 300.

Each of the mobile terminals 200 has an input device 210 comprised of a digital camera, for instance, and hence, can make communication as a television telephone. Thus, the mobile terminal 200 can be used for a conference. The mobile terminal 200 in the second embodiment has the same structure as the structure illustrated in FIG. 5 except that the mobile terminal 200 in the second embodiment can look at and listen to a television program, and concurrently make communication as a television telephone.

When a plurality of users attend to a conference, each using the mobile terminal 200 having a function of a television telephone, it would be necessary to prepare a multi-point control unit (MCU). In order for a plurality of users attending to a conference to be able to commonly have images transmitted from the television broadcast transmitting server 100 during a conference, the control apparatus 300 in the second embodiment is designed to have not only functions which a conventional control apparatus has, but also functions of causing a plurality of the mobile terminals 200 to have images and sound of a television program.

The control apparatus 300 in the second embodiment is comprised of a request receiver 301 which receives a plurality of requests from the mobile terminals 200 of participants attending to a conference, an image/sound receiver 302 which receives images and sound of participants transmitted from a plurality of the mobile terminals 200 of participants attending to a conference, a broadcast-data receiver 307 which receives broadcast data from the television broadcast transmitting server 100 in compliance with a request transmitted from the mobile terminal(s) of a participant(s) attending to a conference, a broadcast-data transmitter 308 which transmits the broadcast data received from the television broadcast transmitting server 100, to the mobile terminal(s) 200 which transmitted a request of transmission of the broadcast data, a receiver 305 which receives broadcast images and sound from the television broadcast transmitting server 100 in compliance with the requests transmitted from the mobile terminals 200 of participants attending to a conference. an image/sound transmitter 306 transmits the broadcast images and sound received from the television broadcast transmitting server 100, to the mobile terminal(s) 200 which transmitted a request of transmission of the broadcast images and sound, an image/sound synthesizer 304 which synthesizes images and sound of a dialed person received by the image/sound receiver 302 to each other, respectively, and further synthesizes the broadcast data received by the broadcast-data receiver 307 or the broadcast images and sound received by the receiver 305 to images and sound of a dialed person, if requested by the request receiver 301, and a multi-point image/sound transmitter 303 which transmits the images and sound having been synthesized by the image/sound synthesizer 304, to the mobile terminals 200 of the participants attending to a conference.

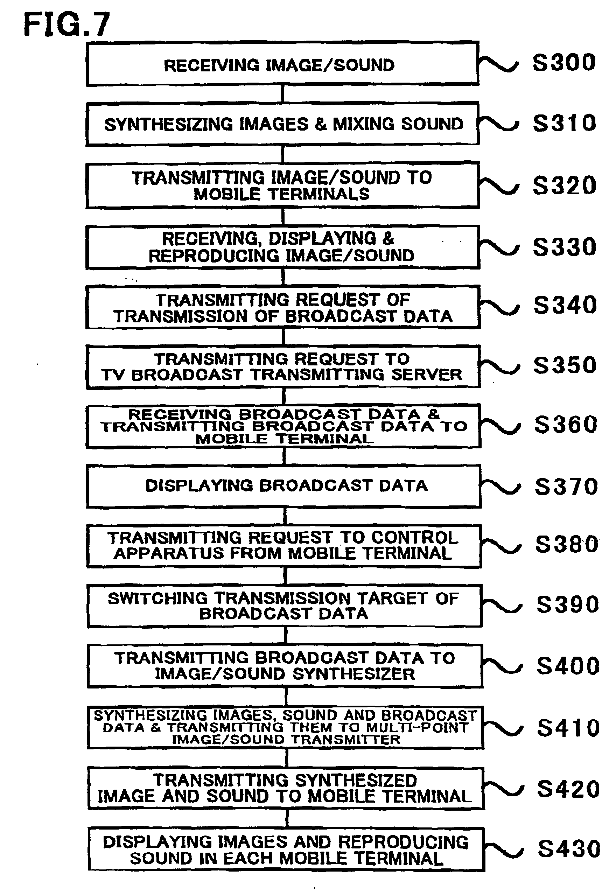

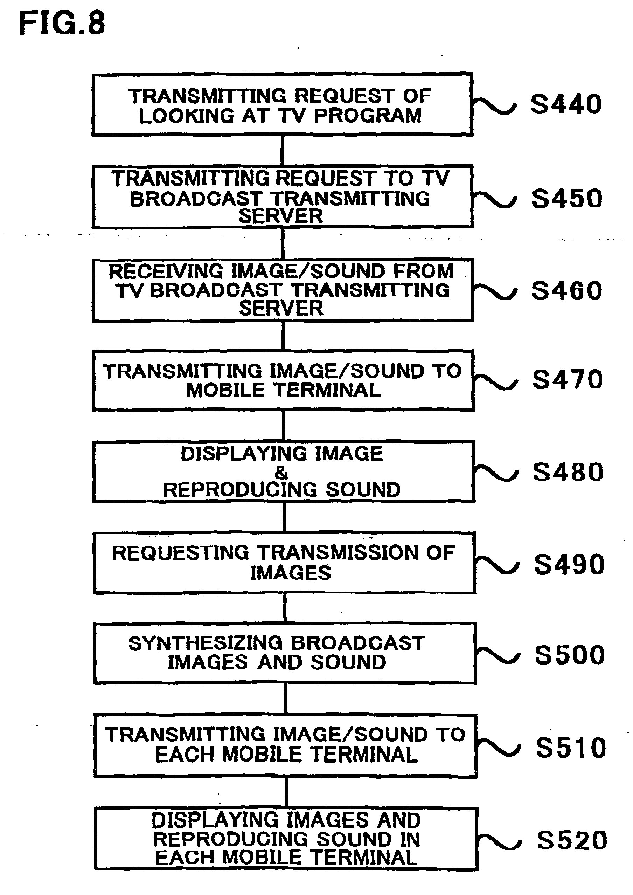

FIGs. 7 and 8 are flow-charts showing an operation of the system in accordance with the second embodiment including the television broadcast transmitting server 100, the control apparatus 300 and the mobile terminals 200. Hereinbelow is explained an operation of the system with reference to FIGs. 7 and 8.

The system in accordance with the second embodiment operates in the same way as the first embodiment in the case that each of the mobile terminals 200 makes direct access to the television broadcast transmitting server 100, and receives distribution of a television program. Hereinbelow is explained a case where a plurality of users attend to a conference, each using the mobile terminal 200.

The control apparatus 300 connects a plurality of the mobile terminals 200 existing at various places, to one another in star-shaped connection through the mobile communication network NW in reservation or instantaneous connection manner. The control apparatus 300 receives images of users and sound of their conversation both transmitted from each of the mobile terminals 200, at the image/sound receiver 302 (step S300), and then, synthesizes a plurality of images of users into one image and mixes sound of a plurality of users to one another (step S310).

Synthesis of images of a plurality of users may be carried out by dividing a screen into sub-sections by the number of the mobile terminals 200 of participants attending to a conference, reducing a size of images of users, and assigning the reduced images into each of the sub-sections, for instance.

The synthesized images and sound are transmitted to each of the mobile terminals 200 of participants attending to a conference, through the control apparatus 300 (step S320).

Each of the mobile terminals 200 receives the images and sound transmitted from the multi-point image/sound transmitter 303, through the communicator 204. The received images are displayed at the display unit 206 by the display controller 208, and the sound is output through the sound output device 207 by the reproduction controller 209 (step S330). Thus, a plurality of users existing at various places can attend to a conference, looking at images of other users.

If a user attending to a conference transmits a request of transmission of broadcast data thereto to the request receiver 301 of the control apparatus 300 through the broadcast-data receiver 202 by operating the input device 201 of his or her mobile terminal 200 in order to make communication with another person and concurrently look at broadcast data of a television program (step S340), the request receiver 301 transmits the received request to the broadcast-data receiver 307.

The broadcast-data receiver 307 transmits the request to the television broadcast transmitting server 100 (step S350), receives broadcast data from the television broadcast transmitting server 100 in response to the request, and transmits the broadcast data to the broadcast-data receiver 202 of the mobile terminal 200 which transmitted the request, through the broadcast-data transmitter 308 (step S360).

The broadcast-data receiver 202 displays the received broadcast data in the display unit 206 through the display controller 208 (step S370). For instance, the display controller 208 causes the display unit 206 to display the images of a dialed person received by the receiver 203, in an upper half of a screen of the display unit 206, and the broadcast data in a lower half of the screen. Thus, the images of a dialed person and the broadcast data are displayed together at the display unit 206. Thus, a user of the mobile terminal 200 can attend to a conference, looking at images of a dialed person, and further can look at broadcast data including EPG and program-related data.

If a user would like to show the broadcast data to other users, the user transmits a request of doing so to the request receiver 301 through the broadcast data receiver 202 by operating the input device 201 of his or her mobile terminal 200 (step S380). The request receiver 301 instructs the broadcast-data receiver 307 to output the broadcast data to the image/sound synthesizer 304 (step S390), and further instructs the image/sound synthesizer 304 to synthesize the broadcast data.

In response, the broadcast-data receiver 307 transmits the broadcast data received from the television broadcast transmitting server 100, to the image/sound synthesizer 304 (step S400). The image/sound synthesizer 304 synthesizes the images of a user and sound of conversation both received by the image/sound receiver 302, to each other, and further synthesizes them to the broadcast data, and then, transmits the thus synthesized images, sound and broadcast data to the multi-point image/sound transmitter 303 (step S410).

In synthesis of the user's images and the broadcast data, images of a plurality of users synthesized to one another are displayed on an upper half of a screen, and the broadcast data is displayed in a lower half of the screen, similarly to the case mentioned earlier, for instance.

The multi-point image/sound transmitter 303 transmits the thus synthesized images and sound to each of the mobile terminals 200 of the users attending to a conference (step S420).

Each of the mobile terminals 200 of the users attending to a conference receives the images and sound at the communicator 204 from the multi-point image/sound transmitter 303. The received images are displayed at the display unit 206 through the display controller 208, and the sound is output through the sound output device 207 by the reproduction controller 209 (step S430). Thus, users existing at various places can attend to a conference, looking at others users' images, and all of the users can look at the same broadcast data.

If the broadcast-data receiver 202 of the mobile terminal 200 transmits a request of transmission of only users' images or transmission of only the broadcast data to the request receiver 301, the image/sound synthesizer 304 stops synthesis of the broadcast data, and the multi-point image/sound transmitter 303 transmits only the users' images and sound or only the broadcast data.

It is assumed that while a user is looking at broadcast data such as EPG, he or she would like to look at and listen to images and sound of a certain television program. In such a case, he or she operates the input device of his or her mobile terminal 200 to transmit a request of looking at a television program together with indication of a channel to the request receiver 301 through the receiver 203 (step S440 in FIG. 8). The request receiver 301 transmits the received request to the receiver 305. The receiver 305 transmits the received request to the television broadcast transmitting server 100 (step S450), and receives images and sound of a requested television program from the television broadcast transmitting server 100 (step S460).

The receiver 305 transmits the received images and sound to the receiver 203 of the mobile terminal 200 which transmitted the request, through the image/sound transmitter 306 (step S470).

The receiver 203 displays the received broadcast images at the display unit 206 through the display controller 208, and outputs the received broadcast sound through the sound output device 207 by the reproduction controller 209 (step S480).

For instance, the display controller 208 displays the images of a dialed person received by the communicator 204, in an upper half of a screen of the display unit 206, and the broadcast images received by the receiver 203, in a lower half of the screen for concurrently displaying the images of a dialed person and the broadcast images at the display unit 206.

The reproduction controller 209 mixes the voices of a dialed person received by the communicator 204 and the broadcast sound received by the receiver 203 to each other, and outputs the mixed sound through the sound output device 207. Thus, a user can make communication or attend to a conference, looking at images of a dialed person, and further, looking at his or her favorite television program.

It is assumed that all of users attending to a conference are necessary to look at images of a certain television program because the television program is a theme of the conference. Each of the users operates the input device 201 of his or her mobile terminal 200 to transmit a request of looking at images of a television program to the request receiver 301 through the receiver 203 (step S490). The request receiver 301 transmits an instruction to the receiver 305 to thereby cause the receiver 305 to transmit the images and sound received from the television broadcast transmitting server 100, to the image/sound synthesizer 304. The request receiver 305 further transmits an instruction to the image/sound synthesizer 304 to synthesize the broadcast images and sound.

In response, the receiver 305 transmits the broadcast images and sound received from the television broadcast transmitting server 100, to the image/sound synthesizer 304. The image/sound synthesizer 304 synthesizes the images of a user and sound of conversation both received by the image/sound receiver 302, to each other, and further synthesizes them to the broadcast data and broadcast sound, and then, transmits the thus synthesized images, sound and broadcast data and sound to the multi-point image/sound transmitter 303 (step S500).

In synthesis of the user's images and the broadcast images, images of a plurality of users synthesized to one another are displayed on an upper half of a screen, and the broadcast images are displayed in a lower half of the screen, similarly to the case mentioned earlier, for instance. The sound of users' conversation and the broadcast sound are synthesized to each other by being mixed to each other.

Then, the multi-point image/sound transmitter 303 transmits the thus synthesized images and sound to each of the mobile terminals 200 of the users attending to a conference (step S510).

Each of the mobile terminals 200 of the users attending to a conference receives the images and sound at the communicator 204 from the multi-point image/sound transmitter 303. The received images are displayed at the display unit 206 through the display controller 208, and the sound is output through the sound output device 207 by the reproduction controller 209 (step S520).

Thus, users existing at various places can attend to a conference, looking at others users' images, and all of the users can look at the same television program.

If the receiver 203 of the mobile terminal 200 transmits a request of transmission of only users' images or transmission of only the television program to the request receiver 301, the image/sound synthesizer 304 stops synthesis of the broadcast images, and the multi-point image/sound transmitter 303 transmits only the users' images and sound or only the broadcast images and broadcast sound.

### INDUSTRIAL APPLICABILITY

As explained above, the present invention makes it possible even for a user who does not have an apparatus for receiving television broadcast, at his or her home to receive broadcast distribution service from a television broadcast transmitting server through his or her mobile terminal, and hence, be able to looking at television programs, while he or she is out of his or her home.

In addition, by designing the system in accordance with the present invention to further include a control apparatus for looking at and listening to a television program and making communication in multi-point, users can make communication with each other, looking at a television program, or can have a chat or attend to a conference, looking at common images.

Specifically, the present invention provided the following advantages.

First, even a user who does not have an apparatus for receiving television broadcast, at his or her home, can look at and listen to broadcast data and/or a television program.

This is because a user can receive television broadcast distribution service by making access to a television broadcast transmitting server through his or her mobile terminal while he or she is out of his or her home, and hence, he or she can look at and listen to broadcast data and a television program in an area in which radio-signals can reach at his or her mobile terminal, or in an area covered with public lines.

Second, a user can readily read broadcast data even in a small screen of a mobile terminal.

This is because a data-form converter in a television broadcast transmitting server converts a form of broadcast data such as EPG into a form suitable for being displayed in a screen of a mobile terminal.

Third, a user can look at and listen to a television program even through a mobile terminal which has a small screen and small line capacity.

This is because an image/sound-form converter in a television broadcast transmitting server converts a form of broadcast image and sound signals in each of channels into a form suitable for being displayed and reproduced in a mobile terminal.

Fourth, it is possible to efficiently distribute broadcast images and sound to a plurality of mobile terminals.

This is because a television broadcast transmitting server is designed to include a plurality of transmitters for transmitting broadcast images and sound to a plurality of mobile terminals, and a multi-caster which distributes broadcast image and sound separated from television broadcast by a separator for each of channels and broadcast images and sound output from an image/sound-form converter in each of channels, into a plurality of transmitters in multi-casting manner.

Fifth, a user can select his or her favorite television program through his or her mobile terminal.

This is because a television broadcast transmitting server is designed to include transmitters which selects broadcast images and sound in a channel to be received from a multi-caster, in response to a request transmitted from a mobile terminal.

Sixth, a user can look at and listen to broadcast to which broadcast data and broadcast images are synthesized.

This is because a mobile terminal is designed to include a display controller which displays received broadcast data and broadcast images concurrently at a display unit.

Seventh, a user can look at and listen to broadcast contents in which data is dynamically updated.

This is because a broadcast-data receiver of a mobile terminal successively receives broadcast data successively transmitted from a television broadcast transmitting server, and a display controller successively displays the received broadcast data at a display unit.

Eighth, a user can make a call by his or her mobile terminal which has a function of looking at and listening to a television program.

This is because a mobile terminal may be designed to have a function as a cellular phone.

Ninth, a user can have a chat through a television telephone, looking at a television program.

This is because a mobile terminal is designed to have functions of synthesizing images of a dialed person and broadcast images to each other and displaying the thus synthesized images at a display unit, and synthesizing voices of a dialed person and broadcast sound to each other and outputting the thus synthesized sound through a sound output device.

Tenth, a user can look at broadcast data at low cost, and look at and listen to high-quality broadcast images and sound by using line switching which provides broadcast images and sound having constant quality.

This is because broadcast data can be transmitted as packets through a packet-switching network or an internet network of public line, and broadcast images and sound can be transmitted through a line-switching network.

Eleventh, a user can look at and listen to not only broadcast data, but also broadcast images and sound at low communication cost.

This is because users can concurrently have a chat or attend to a conference through their mobile terminals, looking at a television program, or make conversation or attend to a conference, looking at common images.

This is because the system in accordance with the present invention may be designed to include a control apparatus for looking at and listening to a television program and making communication in multi-point which apparatus has a function of allowing a plurality of mobile terminals to commonly have images and sound of a television program, as well as functions which a conventional control apparatus has.

## Claims

1. A broadcast-transmitting server comprising:
a separator for separating one or a plurality of broadcast provided through broadcast-distribution service, into broadcast images and broadcast data;
a data transmitter for transmitting said broadcast data separated from said broadcast by said separator, to a mobile terminal; and
a distributor which receives a request indicative of desired broadcast image determined based on said broadcast data, from said mobile terminal, and distributes said desired broadcast image among broadcast images separated from said broadcast by said separator, to said mobile terminal which transmitted said request to said distributor.

2. The broadcast-transmitting server as set forth in claim 1, wherein said distributor is comprised of:
one or a plurality of transmitter(s) which transmit(s) said desired broadcast image requested by said mobile terminal based on said broadcast data, to the mobile terminal which transmitted the request; and
a multi-caster which provides said broadcast image requested by said transmitter among broadcast images separated from said broadcast by said separator, to said transmitter which requested to receive said broadcast image.

3. The broadcast-transmitting server as set forth in claim 2, wherein said multi-caster distributes said broadcast image separated from said broadcast by said separator, in a multi-casting way, and said transmitter(s) selects broadcast image or broadcast images among said broadcast images distributed from said multi-caster, in accordance with said request transmitted from said mobile terminal.

4. The broadcast-transmitting server as set forth in claim 2 or 3, wherein said distributor monitors whether said transmitter is in operation or not, and assigns a transmitter not in operation to said mobile terminal on receipt of said request from said mobile terminal.

5. The broadcast-transmitting server as set forth in claim 1, 2, 3 or 4, further comprising a data-form converter which converts a form of said broadcast data separated from said broadcast by said separator, into a form suitable for being displayed in said mobile terminal.

6. The broadcast-transmitting server as set forth in claim 1, 2, 3, 4 or 5, further comprising a converter which converts a form of said broadcast image separated from said broadcast by said separator, into a form suitable for being displayed or reproduced in said mobile terminal.

7. Abroadcast-transmitting server comprising:
a separator for separating one or a plurality of broadcast provided through broadcast-distribution service, into broadcast images and broadcast data;
a data-transmitter which transmits said broadcast data separated from said broadcast by said separator, to a control apparatus for looking at and listening to broadcast and making communication in multi-point which apparatus receives image and sound from one or a plurality of mobile terminal(s), and synthesizes image and sound, respectively, for producing communication image and communication sound; and
a distributor receives a request of transmission of desired broadcast image through said control apparatus which request is determined in said mobile terminal in accordance with said broadcast data transmitted through said control apparatus, and transmits the requested desired broadcast image among said broadcast images separated from said broadcast by said separator, into said control apparatus which transmitted said request.

8. The broadcast-transmitting server as set forth in claim 7, wherein said distributor is comprised of:
one or a plurality of transmitter(s) which receive(s) said request of transmission of desired broadcast image through said control apparatus, and transmit(s) said requested desired broadcast image to said mobile terminal which transmitted said request, through said control apparatus; and
a multi-caster which distributes broadcast image requested by said transmitter(s) among said broadcast images separated from said broadcast by said separator, to said transmitter(s) which transmitted said request.

9. The broadcast-transmitting server as set forth in claim 7 or 8, wherein said multi-caster distributes said broadcast image separated from said broadcast by said separator, in a multi-casting way, and said transmitter(s) selects broadcast image or broadcast images among said broadcast images distributed from said multi-caster, in accordance with said request transmitted from said mobile terminal through said control apparatus.

10. The broadcast-transmitting server as set forth in claim 7, 8 or 9, further comprising a data-form converter which converts a form of said broadcast data separated from said broadcast by said separator, into a form suitable for being displayed in said mobile terminal making communication with said control apparatus.

11. The broadcast-transmitting server as set forth in claim 7, 8, 9 or 10, further comprising a converter which converts a form of said broadcast image separated from said broadcast by said separator, into a form suitable for being displayed or reproduced in said mobile terminal making communication with said control apparatus.

12. A control apparatus for looking at and listening to broadcast and making communication in multi-point, comprising:
a request receiver which receives requests from mobile terminals;
an image/sound receiver which receives image and sound transmitted from said mobile terminals;
a broadcast-data receiver which receives, from a broadcast-transmitting server which separates one or a plurality of broadcast provided through broadcast-distribution service, into broadcast images and broadcast data, and distributes said broadcast images and said broadcast data, said broadcast data in accordance with a request transmitted from said mobile terminal;
a receiver which receives a request of transmission of desired broadcast image determined by said mobile terminal in accordance with said broadcast data, transmits said request to said broadcast-transmitting server, and receives said desired broadcast image from said broadcast-transmitting server;
an image/sound synthesizer which synthesizes image and sound received by said image/sound receiver for producing communication image and communication sound, and, on receipt of a request from said request receiver, synthesizes said broadcast data received by said broadcast-data receiver or said broadcast image received by said receiver and said communication image and sound with each other; and
a multi-point image/sound transmitter which transmits said communication image and sound having been synthesized with said broadcast data or said broadcast image in said image/sound receiver, to said mobile terminal.

13. The control apparatus as set forth in claim 12, further comprising:
a broadcast-data transmitter which transmits said broadcast data received by said broadcast-data receiver, to said mobile terminal transmitting said request; and
an image/sound transmitter which transmits said broadcast image received by said receiver, to said mobile terminal transmitting said request.

14. The control apparatus as set forth in claim 12 or 13, wherein said broadcast data is transmitted as packets through packet-switching network or internet network of public line, and said broadcast image, said communication image and said communication sound are transmitted through line-switching network.

15. A mobile terminal comprising:
a broadcast-data receiver which receives, from a broadcast-transmitting server which separates one or a plurality of broadcast provided through broadcast-distribution service, into broadcast images and broadcast data, and distributes said broadcast images and said broadcast data, said broadcast data;
a receiver which transmits a request of transmission of desired broadcast image determined in accordance with said broadcast data, to said broadcasting-transmitting server, and receives said desired broadcast image from said broadcast-transmitting server; and
a display controller which displays said broadcast data received by said broadcast-data receiver or said broadcast image received by said receiver.

16. The mobile terminal as set forth in claim 15, wherein said display controller concurrently displays said broadcast data received by said broadcast-data receiver and said broadcast image received by said receiver.

17. The mobile terminal as set forth in claim 15 or 16, wherein said receiver receives broadcast sound, and further comprising a reproduction controller which outputs received broadcast sound.

18. The mobile terminal as set forth in claim 15, 16 or 17 wherein said broadcast-data receiver successively transmits a request of transmission of said broadcast data to said broadcast-transmitting server, and successively receives said broadcast data from said broadcast-transmitting server, and
said display controller successively displays said broadcast data received by said broadcast-data receiver.

19. The mobile terminal as set forth in claim 15, 16 or 17 wherein said mobile terminal works as a cellular phone.

20. The mobile terminal as set forth in claim 17, 18 or 19, wherein said mobile terminal has a function of a cellular phone which makes communication with other phones through sound and image,
said display controller displays image of a person with which said mobile terminal makes communication, or said broadcast image, and
said reproduction controller outputs voice of a person with which said mobile terminal makes communication, or said broadcast sound.

21. A mobile terminal comprising:
a communicator which receives, from a control apparatus for looking at and listening to broadcast and making communication in multi-point which apparatus receives images and sound from one or a plurality of mobile terminal(s), and synthesizes said images and said sound with one another, respectively, to thereby produce communication image and communication sound, said communication image and said communication sound;
a broadcast-data receiver which transmits a request of transmission of broadcast data to said control apparatus, causes said control apparatus to receive the requested broadcast data from a broadcast-transmitting server which separates one or a plurality of broadcast provided through broadcast-distribution service, into broadcast images and broadcast data, and distributes said broadcast images and said broadcast data, and receives said requested broadcast data from said control apparatus; and
a receiver which transmits a request of transmission of desired broadcast image determined in accordance with said broadcast data received by said broadcast-data receiver, to said control apparatus, and receives said desired broadcast image from said broadcast-transmitting server.

22. The mobile terminal as set forth in claim 21, wherein said broadcast-data receiver transmits a request of synthesizing said broadcast data to said communication image to said control apparatus, and causes said control apparatus to synthesize said broadcast data and said communication image to each other and transmit said communication sound and said communication image to which said broadcast data has been synthesized, and
said communicator receives said communication sound and said communication image to which said broadcast data has been synthesized, from said control apparatus.

23. The mobile terminal as set forth in claim 21 or 22, wherein said receiver transmits a request of synthesizing said broadcast image to said communication image to said control apparatus, and causes said control apparatus to synthesize said broadcast image and said communication image to each other and transmit said communication sound and said communication image to which said broadcast image has been synthesized, and
said communicator receives said communication sound and said communication image to which said broadcast image has been synthesized, from said control apparatus.

24. The mobile terminal as set forth in claim 21, 22 or 23, wherein said receiver receives broadcast sound, and further comprising:
a display controller which displays at least one of said broadcast data received by said broadcast-data receiver, said broadcast image received by said receiver, and said communication image received by said communicator; and
a reproduction controller which outputs said communication sound received by said receiver or said communication sound received by said communicator.

25. The mobile terminal as set forth in claim 24, wherein said display controller concurrently displays said broadcast data received by said broadcast-data receiver and said communication image received by said communicator in a display unit.

26. A method of looking at and listening to broadcast between a broadcast-transmitting server and a plurality of mobile terminals connected to said broadcast-transmitting server through a communication network, comprising:
said broadcast-transmitting server separating one or a plurality of broadcast provided through broadcast-distribution service, into broadcast image and broadcast data, and transmitting said broadcast data to said mobile terminal;
said mobile terminal receiving said broadcast data, and transmitting a request of transmission of said broadcast image to said broadcast-transmitting server in accordance with said broadcast data; and
said broadcast-transmitting server receiving said request from said mobile terminal, and transmitting the requested broadcast image to said mobile terminal.

27. A method of looking at and listening to broadcast between a broadcast-transmitting server and a plurality of mobile terminals connected to said broadcast-transmitting server through a communication network, comprising:
said mobile terminal transmitting a request of transmission of broadcast data to said broadcast-transmitting server;
said broadcast-transmitting server receiving said request transmitted from said mobile terminal, separating one or a plurality of broadcast provided through broadcast-distribution service, into broadcast image and broadcast data, and transmitting said broadcast data to said mobile terminal which transmitted said request;
said mobile terminal receiving said broadcast data, and transmitting a request of transmission of said broadcast image to said broadcast-transmitting server in accordance with said broadcast data; and
said broadcast-transmitting server receiving said request from said mobile terminal, and transmitting the requested broadcast image to said mobile terminal.

28. A method of looking at and listening to broadcast among a broadcast-transmitting server, a plurality of mobile terminals, and a control apparatus for looking at and listening to broadcast and making communication in multi-point which apparatus is connected to said broadcast-transmitting server and said mobile terminals through a communication network, comprising:
said control apparatus receiving images and sound from one or a plurality of mobile terminal(s), synthesizing said images and said sound with one another, respectively, to thereby produce communication image and communication sound, and transmitting the thus produced communication image and communication sound;
said mobile terminal receiving said communication image and said communication sound, displaying said communication image, outputting said communication sound, and transmitting a request of transmission of broadcast data to said control apparatus;
said control apparatus requested said broadcast-transmitting server to transmit thereto said broadcast data requested by said mobile terminal;
said broadcast-transmitting server separating one or a plurality of broadcast provided through broadcast-distribution service, into broadcast image and broadcast data, and transmitting said requested broadcast data to said control apparatus; and
said control apparatus receiving said broadcast data and transmitting the thus received broadcast data to said mobile terminal.

29. The method as set forth in claim 28, wherein said mobile terminal requests said control apparatus to synthesize said broadcast data received by said control apparatus,
said control apparatus synthesizes said broadcast data, said communication image and said communication sound with one another, and transmits them to said mobile terminal, and
said mobile terminal receives and outputs said communication image and said communication sound to which said broadcast data has been synthesized.

30. A method of looking at and listening to broadcast among a broadcast-transmitting server, a plurality of mobile terminals, and a control apparatus for looking at and listening to broadcast and making communication in multi-point which apparatus is connected to said broadcast-transmitting server and said mobile terminals through a communication network, comprising:
said control apparatus receiving images and sound from one or a plurality of mobile terminal(s), synthesizing said images and said sound with one another, respectively, to thereby produce communication image and communication sound, and transmitting the thus produced communication image and communication sound;
said mobile terminal receiving said communication image and said communication sound, displaying said communication image, outputting said communication sound, and transmitting a request of transmission of broadcast image to said control apparatus;
said control apparatus requested said broadcast-transmitting server to transmit thereto said broadcast image requested by said mobile terminal;
said broadcast-transmitting server separating one or a plurality of broadcast provided through broadcast-distribution service, into broadcast image and broadcast data, and transmitting said requested broadcast image to said control apparatus; and
said control apparatus receiving said broadcast image and transmitting the thus received broadcast image to said mobile terminal.

31. The method as set forth in claim 30, wherein said mobile terminal requests said control apparatus to synthesize said broadcast image received by said control apparatus,
said control apparatus synthesizes said broadcast image. said communication image and said communication sound with one another, and transmits them to said mobile terminal, and
said mobile terminal receives and outputs said communication image and said communication sound to which said broadcast image has been synthesized.
